# EUROPÄISCHE PATENTSCHRIFT

(11) **EP 0 939 780 B1**
(45) Veröffentlichungstag und Bekanntmachung des Hinweises auf die Patenterteilung: **13.02.2002**
(21) Anmeldenummer: 97951874.3
(22) Anmeldetag: 10.11.1997
(51) Int. Cl.: C08G 18/48, A43B 13/04, A41D 13/00

(54) **VERWENDUNG VON POLYETHER-PUR FÜR SICHERHEITSKLEIDUNG**
THE USE OF POLYETHER-POLYURETHANE FOR SAFETY CLOTHING
UTILISATION DE POLYETHER-POLYURETHANE POUR VETEMENT DE PROTECTION

(30) Priorität: 22.11.1996 DE 19648509
(43) Veröffentlichungstag der Anmeldung: 08.09.1999
(73) Patentinhaber: BAYER AG, 51368 Leverkusen (DE)
(72) Erfinder: BRECHT, Klaus, D-51399 Burscheid (DE); ARNTZ, Hans-Detlef, D-53797 Lohmar (DE); JOHN, Bernard, D-51375 Leverkusen (DE)
(86) Internationale Anmeldenummer: EP9706233
(87) Internationale Veröffentlichungsnummer: WO9823659

(56) Entgegenhaltungen:
- EP-A- 0 650 989
- DE-A- 3 824 055
- DE-A- 4 032 148
- US-A- 4 722 946

## Beschreibung

Die Erfindung betrifft die Verwendung von zelligen bis massiven Formkunststoffen aus Polyether-PUR zur Herstellung von Sicherheitskleidung, vorzugsweise Sicherheitsschuhsohle.

Die Herstellung von Formkunststoffen auf Polyurethan-Basis gehört seit Jahrzehnten zum längst bekannten Stand der Technik. Diese Formkunststoffe können in einem großen Dichte- und Härtebereich für die unterschiedlichen Anwendungen hergestellt werden, z.B. als Schutzkleidung (z.B US-A-4 722 946).

Der überwiegende Einsatz der Polyurethane für den Bereich der Schutzkleidung erfolgt als Schutzschuh. Aufgrund bestehender Normen (EN. 344 ff), die den Aufbau und die Eigenschaften der Sicherheitsschuhe vorschreiben ist die Materialauswahl bisher auf den Einsatz von Polyester-PUR beschränkt. Der Hauptgrund für den Ausschluß von Polyether-PUR besteht in der nicht ausreichenden Beständigkeit gegen Öl und Benzin (EN 344 Punkt 4.8.9 Kraftstoffbeständigkeit).

Polyester-PUR bzw. die zu ihrer Herstellung im Reaktionsspritzgußverfahren notwendigen Komponenten weisen jedoch die im folgenden genannten Nachteile auf:
- hohe Viskositäten der verarbeitungsfertigen Komponenten bedingt ungünstige Formenabbildung
- die zur Verarbeitung notwendige erhöhte Temperatur der verarbeitungsfertigen Komponenten reduziert ihre Haltbarkeit
- ungenügende Hydrolysen und Mikrobenbeständigkeit besonders im landwirtschaftlichen Einsatz oder in Regionen mit feuchtwarmem Klima, die sich auch in beschränkte Lagerbeständigkeit von fertigen Sicherheitsschuhen auswirken
- geringe Kälteflexibilität von Standard-Polyester-PUR

Die Herstellung von Polyether-PUR nach dem Reaktionsgießverfahren oder Reaktionsspritzverfahren gehört ebenso wie die Polyester-PUR-Verarbeitung zum Stand der Technik. Sowohl im einschichtigen als auch im zweischichtigen Formsohlen- und Direktbesohlungsverfahren zur Herstellung von Straßen-, Freizeit- und Sportschuhen wird Polyester-PUR in den je nach Anforderungen variierenden Dichte- und Härtebereichen eingesetzt.

Im Zusammenhang mit Neuentwicklungen von PUR auf Polyether-Basis wurde überraschenderweise eine für den Einsatz im Sicherheitsschuhbereich ausreichende Kraftstoffbeständigkeit festgestellt.

Die Erfindung betrifft die Verwendung von zelligen bis massiven Formkunststoffen auf Polyether-Basis durch Formverschäumung zur Herstellung von Sicherheitskleidung.

Als Sicherheitskleidung, welche die Normen EN 344 erfüllt (Kraftstoffbeständigkeit in Isooctan <12 Vol%) erfüllt, sind z.B. Sicherheitschuhe, -stiefel, Schürzen usw. genannt.

Die Kraftstoffbeständigkeit wird bei Laufsohlenrohdichten von > 800 kg/m³ mit den im folgenden beispielhaft genannten Polyether PUR-Systemrohstoffen erreicht.

Die Herstellung von zelligen bis massiven Formkunststoffen auf Polyether-Polyurethan-Basis erfolgt durch Formverschäumung eines Reaktionsgemisches, aus
a) einer höhermolekularen Polyetherpolyol-Komponente,
b) einer Polyisocyanat-Komponente,
c) Kettenverlängerungsmitteln,
d) gegebenenfalls Treibmitteln,
e) Aktivatoren und gegebenenfalls
f) weiteren Hilfs- und Zusatzmitteln,
wobei die Ausgangsmaterialien unter Einhaltung einer Isocyanat-Kennzahl von 70 bis 130 zur Reaktion gebracht werden.

Die höhermolekulare Polyetherpolyol-Komponente a) hat eine Hydroxylfunktionalität von 2,00 oder stellt im wesentlichen ein Gemisch mit einer mittleren Hydroxylfunktionalität von 2,02 bis 2,95 dar aus
aa) mindestens einem Polyetherdiol des Hydroxylzahlbereichs 10 bis 115, welches durch Propoxylierung eines difunktionellen Starters und anschließende Ethoxylierung des Propoxylierungsproduktes unter Einhaltung eines Gewichtsverhältnisses von Propylenoxid zu Ethylenoxid von 60:40 bis 85:15 hergestellt worden ist und
ab) mindestens einem, gegebenenfalls Füllstoffe auf Basis von Styrol-Acrylnitril-Copolymerisaten, Polyharnstoffen oder Polyhydrazocarbonamiden in einer Menge von bis zu 20 Gew.-%, bezogen auf das Gesamtgewicht der Komponente a), enthaltendem Polyethertriol des Hydroxylzahlbereichs 12 bis 56, welches durch Propoxylierung eines trifunktionellen Starters und anschließender Einhaltung eines Gewichtsverhältnisses von Propylenoxid zu Ethylenoxid von 60:40 bis 85:15 hergestellt worden ist.

Die Polyisocyanatkomponente b) ist ein Isocyanatgruppen aufweisendes Semiprepolymer mit einem NCO-Gehalt von 10 bis 25-Gew.-%, hergestellt durch Umsetzung von (i) 4,4'-Diisocyanatodiphenylmethan mit (ii) einer Polyetherkomponente des Hydroxylzahlbereichs 10 bis 115 und einer (mittleren) Hydroxylfunktionalität von 2,0 bis 2,5, bestehend aus mindestens einem Polyetherdiol, hergestellt durch Propoxylierung eines difunktionellen Starters und gegebenenfalls anschließende Ethoxylierung des Propoxylierungsproduktes unter Verwendung von bis zu 40 Gew.-% Ethylenoxid, bezogen auf das Gewicht des Polyetherdiols oder einem Gemisch aus mindestens einem derartigen Diol mit mindestens einem Polyethertriol, hergestellt durch Propoxylierung eines trifunktionellen Starters und gegebenenfalls anschließende Ethoxylierung des Propoxylierungsproduktes unter Verwendung von bis zu 40 Gew.-% Ethylenoxid, bezogen auf das Gewicht des Polyethertriols und/oder einer Polyesterkomponente des Hydroxylbereichs von 28 bis 115 und einer mittleren Funktionalität von 2,0 bis 2,5, wobei gegebenenfalls der Komponente (i) vor der Umsetzung oder dem Umsetzungsprodukt, mit Polypropylenglykolen des Molekulargewichtsbereichs 134 bis 700 und/oder durch Carbodiimidisierung eines Teils der Isocyanatgruppen verflüssigtes 4,4'-Diisocyanatodiphenylmethan in einer Menge von bis zu 10 Gew.-%, bezogen auf das Gewicht der Komponente (i), zugesetzt worden ist.

Als Komponente c) werden Ethandiol-1,2 und/oder Butandiol-1,4 und/oder Diethylenglykol und/oder Triethanolamin und/oder Diethyltoluylendiamin,
als Komponente d) gegebenenfalls Wasser und/oder ein physikalisches Treibmittel z.B. R 134 a® (Hydrofluoralkangemisch) eingesetzt.

Als Aktivatoren e) kommen die aus der Polyurethanchemie an sich bekannten Verbindungen wie beispielsweise tert. Amine wie Triethylendiamin, N,N-Dimethylbenzylamin oder organische Zinnverbindungen wie beispielsweise Dibutylzinndilaurat oder Zinn(II)-octoat in Betracht.

Als weitere gegebenenfalls mitzuverwendende Hilfs- und Zusatzmittel f) seien oberflächenaktive Substanzen, Schaumstabilisatoren, Zellregler, innere Trennmittel, Farbstoffe, Pigmente, Hydrolyseschutzmittel, fungistatisch und bakteriostatisch wirkende Substanzen, Lichtschutz-, Oxidationsschutzmittel und Antistatika (quartanäre Amoniumverbindungen) beispielhaft genannt.

Die Herstellung der Polyurethane erfolgt nach dem bekannten Stand der Technik. Dies bedeutet im allgemeinen, daß die Komponenten a) und c) bis f) zu einer "Polyolkomponente" vereinigt werden und einstufig mit der Polyisocyanatkomponente b) in einer geschlossenen Form, beispielsweise einer geschlossenen Metall- oder Kunststofform miteinander zur Reaktion gebracht werden, wobei man sich der üblichen Zweikomponenten-Mischaggregate bedient. Die Menge des in die Form eingebrachten Reaktionsgemisches und auch die Menge des gegebenenfalls als Treibmittel verwendeten Wassers und/oder eines physikalischen Treibmittels, z.B. R 134® , werden dabei so bemessen, daß Formschaumstoffe einer Rohdichte von ≥800 kg/m³ resultieren. Ihr wichtigstes Verwendungsgebiet liegt in der Schuhherstellung, erfindungsgemäß von zelligen bis massiven Laufsohlen für den Sicherheitsschuh. Vorzugsweise haben diese eine Laufsohlenrohdichte ≥ 800 kg/m³ und sind in einer besonderen Ausführungsform mit einer Zwischensohle mit einer Rohdichte ≥ 400 kg/m² verbunden.

### Beispiele

Im folgenden Beispiel sind Rezeptur-Beispiele für den Einsatz von Laufsohlen für Sicherheitsschuhe erläutert. In allen Beispielen wurde unter Beachtung einer Isocyanatkennzahl von 100 gearbeitet. Prüfkörper zur Bestimmung der mechanischen Eigenschaften sowie der Beständigkeit gegen Benzin (EN 344, Punkt 4.8.9) wurden Prüfplatten der Abmessung 20 x 20 x 1 cm entnommen.

### Ausgangsmaterialien:

### Polyhydroxylverbindungen a)

- a₁: Polyetherdiol, OHZ 28, PO/EO Gewichtsverhältnis 70:30
- a₂: Polyetherdiol, OHZ 28, PO/EO Gewichtsverhältnis 77:23

### Polyisocyanat b)

Umsetzungsprodukt von 4,4'-Diisocyanatodiphenylmethan (MDI) mit Tripropylenglykol NCO-Gehalt 23 %.

### Beispiel:

Die Rezepturen der Beispiele 1 - 3 sind in nachstehender Tabelle 1, die mechanischen Eigenschaften sowie die Beständigkeit gegen Benzin sind in Tabelle 2 zusammengefaßt.

**Tabelle 1**

| (alle Zahlen beziehen sich auf Gewichtsteile) | | | |
|---|---|---|---|
| | **Beispiel 1** | **Beispiel 2** | **Beispiel 3** |
| Komponente a₁ | 90,00 | 79,27 | 71,55 |
| Komponente a₂ | --- | 10,00 | 20,00 |
| Butandiol-1,4 | 6,00 | 7,50 | --- |
| Ethandiol-1,2 | --- | 0,50 | --- |
| Diethyltoluylendiamin | --- | --- | 6,00 |
| Triethylendiamin | 1,80 | 0,60 | 0,20 |
| Dibutylzinndilaurat | 0,05 | 0,03 | 0,05 |
| Triethanolamin | 0,15 | --- | 0,20 |
| Wasser | --- | 0,10 | --- |
| Tetraalkylammoniumsulfat (Catafor CA 100) | 2,00 | 2,00 | 2,00 |
| Polyisocyanat b) | 33 | 44 | 26 |

**Tabelle 2:**

| Mechanische Eigenschaften | | | | |
|---|---|---|---|---|
| | | **Beispiel 1** | **Beispiel 2** | **Beispiel 3** |
| Rohdichte DIN 54320 | (kg/m³) | 1100 | 900 | 1080 |
| Härte DIN 53505 | (Shore A) | 60 | 60 | 70 |
| Zugfestigkeit DIN 53504 | (Mpa) | 16 | 8 | 12 |
| Bruchdehnung DIN 53504 | (%) | 800 | 600 | 610 |
| Weiterreißfestigkeit DIN 53516 | (kN/m) | 18 | 10 | 20 |
| Kraftstoffbeständigkeit EN 344 | (% Volumenänderung) | 9,5 | 10,5 | 11,5 |

## Patentansprüche

1. Verwendung von zelligen bis massiven Formkunststoffen auf Polyether-Polyurethanbasis zur Herstellung von kraftstoffbeständiger Sicherheitskleidung, welche die Norm EN 344 Punkt 4.8.9 (Kraftstoffbeständigkeit) erfüllt, durch Formverschäumung eines Reaktionsgemisches aus
a) einer höhermolekularen Polyetherpolyol-Komponente, die eine Hydroxylfunktionalität von 2,00 hat oder im wesentlichen ein Gemisch mit einer mittleren Hydroxylfunktionalität von 2,02 bis 2,95 darstellt aus
aa) mindestens einem Polyetherdiol des Hydroxylzahlbereichs 10 bis 115, welches durch Propoxylierung eines difunktionellen Starters und anschließende Ethoxylierung des Propoxylierungsproduktes unter Einhaltung eines Gewichtsverhältnisses von Propylenoxid zu Ethylenoxid von 60:40 bis 85:15 hergestellt worden ist und
ab) mindestens einem, gegebenenfalls Füllstoffe auf Basis von Styrol-Acrylnitril-Copolymerisaten, Polyharnstoffen oder Polyhydrazocarbonamiden in einer Menge von bis zu 20 Gew.-%, bezogen auf das Gesamtgewicht der Komponente a), enthaltendem Polyethertriol des Hydroxylzahlbereichs 12 bis 56, welches durch Propoxylierung eines trifunktionellen Starters und anschließender Einhaltung eines Gewichtsverhältnisses von Propylenoxid zu Ethylenoxid von 60:40 bis 85:15 hergestellt worden ist,
b) einer Polyisocyanat-Komponente, die ein Isocyanatgruppen aufweisendes Semiprepolymer mit einem NCO-Gehalt von 10 bis 25 Gew.-% ist, hergestellt durch Umsetzung von (i) 4,4'-Diisocyanatodiphenylmethan mit (ii) einer Polyetherkomponente des Hydroxylzahlbereichs 10 bis 115 und einer (mittleren) Hydroxylfunktionalität von 2,0 bis 2,5, bestehend aus mindestens einem Polyetherdiol, hergestellt durch Propoxylierung eines difünktionellen Starters und gegebenenfalls anschließende Ethoxylierung des Propoxylierungsproduktes unter Verwendung von bis zu 40 Gew.-% Ethylenoxid, bezogen auf das Gewicht des Polyetherdiols oder einem Gemisch aus mindestens einem derartigen Diol mit mindestens einem Polyethertriol, hergestellt durch Propoxylierung eines trifunktionellen Starters und gegebenenfalls anschließende Ethoxylierung des Propoxylierungsproduktes unter Verwendung von bis zu 40 Gew.-% Ethylenoxid, bezogen auf das Gewicht des Polyethertriols und/oder einer Polyesterkomponente des Hydroxylbereichs von 28 bis 115 und einer mittleren Funktionalität von 2,0 bis 2,5, wobei gegebenenfalls der Komponente (i) vor der Umsetzung oder dem Umsetzungsprodukt, mit Polypropylenglykolen des Molekulargewichtsbereichs 134 bis 700 und/oder durch Carbodiimidisierung eines Teils der Isocyanatgruppen verflüssigtes 4,4'-Diisocyanatodiphenylmethan in einer Menge von bis zu 10 Gew.-%, bezogen auf das Gewicht der Komponente (i), zugesetzt worden ist,
c) Kettenverlängerungsmitteln,
d) gegebenenfalls Treibmitteln,
e) Aktivatoren und gegebenenfalls
f) weiteren Hilfs- und Zusatzmitteln,
wobei die Ausgangsmaterialien unter Einhaltung einer Isocyanat-Kennzahl von 70 bis 130 zur Reaktion gebracht werden und wobei die zelligen bis massiven Formkunststoffe auf Polyether-Polyurethan-Basis eine Rohdichte von ≥ 800 kg/m³ aufweisen.

2. Verwendung gemäß Anspruch 1 als Laufsohle für Sicherheitsschuhe.

3. Verwendung nach Anspruch 2, **dadurch gekennzeichnet, daß** die Laufsohle mit einer Zwischensohle mit einer Rohdichte ≥ 400 kg/m³ verbunden ist.

## Claims

1. Use of cellular to solid moulded plastics based on polyether polyurethane for the production of fuel-resistant safety clothing which meets the requirements of standard EN 344, point 4.8.9 (fuel resistance), by mould foaming a reaction mixture of
a) a relatively high molecular weight polyether polyol component which has a hydroxyl functionality of 2.00 or substantially comprises a mixture having an average hydroxyl functionality of 2.02 to 2.95 prepared from
aa) at least one polyether diol of the hydroxyl value range from 10 to 115, which has been produced by propoxylating a difunctional starter and subsequently ethoxylating the propoxylation product while maintaining a weight ratio of propylene oxide to ethylene oxide of 60:40 to 85:15 and
ab) at least one polyether triol of the hydroxyl value range from 12 to 56, optionally containing fillers based on styrene/ acrylonitrile copolymers, polyureas or polyhydrazocarbonamides in a quantity of up to 20 wt.%, relative to the total weight of component a), which polyether triol has been produced by propoxylating a trifunctional starter and subsequently maintaining a weight ratio of propylene oxide to ethylene oxide of 60:40 to 85:15,
b) a polyisocyanate component which is a semi-prepolymer comprising isocyanate groups and having an NCO content of 10 to 25 wt.% produced by reacting (i) 4,4'-di-isocyanatodiphenylmethane with (ii) a polyether component of the hydroxyl value range of 10 to 115 and an (average) hydroxyl functionality of 2.0 to 2.5, consisting of at least one polyether diol, produced by propoxylating a difunctional starter and optionally subsequently ethoxylating the propoxylation product using up to 40 wt.% of ethylene oxide, relative to the weight of the polyether diol, or a mixture of at least one such diol with at least one polyether triol, produced by propoxylating a trifunctional starter and optionally subsequently ethoxylating the propoxylation product using up to 40 wt.% of ethylene oxide, relative to the weight of the polyether triol, and/or a polyester component of the hydroxyl value range from 28 to 115 and an average functionality of 2.0 to 2.5, wherein component (i) has optionally been added before the reaction or to the reaction product, with polypropylene glycols of the molecular weight range from 134 to 700 and/or by carbodiimidising a proportion of the isocyanate groups of liquefied 4,4'-diisocyanatodiphenylmethane in a quantity of up to 10 wt.%, relative to the weight of component (i),
c) chain extenders,
d) optionally blowing agents,
e) activators and optionally
f) further auxiliary substances and additives, wherein the starting materials are reacted while maintaining an isocyanate index of 70 to 130 and wherein the cellular to solid moulded plastics based on polyether polyurethane have a bulk density of ≥ 800 kg/m³.

2. Use according to claim 1 as a safety shoe outsole.

3. Use according to claim 2, **characterised in that** the outsole is associated with a throughsole having a bulk density of ≥ 400 kg/m³.

## Revendications

1. Utilisation de résines synthétiques à mouler, alvéolaires ou massives, à base de polyéther-polyuréthannes, pour la fabrication de vêtements de sécurité résistant aux carburants et satisfaisant à la norme EN 344, paragraphe 4.8.9 (résistance aux carburants) par gonflement en mousse dans un moule d'un mélange de réaction comprenant
a) un composant polyéther-polyol à haut poids moléculaire ayant une fonctionnalité en groupes hydroxy de 2,00 ou consistant essentiellement en un mélange à une fonctionnalité moyenne en groupes hydroxyde de 2,02 à 2,95,
qui consiste lui-même en
aa) au moins un polyéther-diol ayant un indice d'hydroxyle de 10 à 115, qui a été préparé par propoxylation d'un composant de départ difonctionnel suivie de l'éthoxylation du produit de propoxylation, avec maintien de proportions relatives en poids de 60:40 à 85:15 entre l'oxyde de propylène et l'oxyde d'éthylène, et
ab) au moins un polyéther-triol d'indice d'hydroxyle 12 à 56, contenant le cas échéant des matières de charge à base de copolymères styrène-acrylonitrile, de polyurées ou de polyhydrazocarboxamides en quantité allant jusqu'à 20 % du poids total du composant a), ce polyéther-triol ayant été préparé par propoxylation d'un composant de départ trifonctionnel et maintien, ensuite, de proportions relatives en poids de 60:40 à 85:15 entre l'oxyde de propylène et l'oxyde d'éthylène,
b) un composant polyisocyanate consistant en un semi-prépolymère à groupes isocyanates, à une teneur en NCO de 10 à 25 % en poids, qui a été préparé par réaction de (i) le 4,4'-diisocyanatodiphénylméthane avec (ii) un composant polyéther ayant un indice d'hydroxyle de 10 à 115 et une fonctionnalité (moyenne) en groupes hydroxy de 2,0 à 2,5, qui consiste lui-même en au moins un polyéther-diol préparé par propoxylation d'un composant de départ difonctionnel éventuellement suivie d'une éthoxylation du produit de propoxylation par l'oxyde d'éthylène en proportion allant jusqu'à 40 % du poids du polyéther-diol ou en un mélange d'au moins un tel diol avec au moins un polyéther-triol préparé par propoxylation d'un composant de départ trifonctionnel suivie le cas échéant d'une éthoxylation du produit de propoxylation par une quantité d'oxyde d'éthylène représentant jusqu'à 40 % du poids du polyéther-triol et/ou en un composant polyester ayant un indice d'hydroxyle de 28 à 115 et une fonctionnalité moyenne de 2,0 à 2,5, avec addition éventuelle au composant (i), avant la réaction, ou au produit de réaction, de polypropylèneglycols de poids moléculaire 134 à 700 et/ou de 4,4'-diisocyanatodiphénylméthane liquéfié par carbodiimidation d'une partie des groupes isocyanate, en quantité allant jusqu'à 10 % du poids du composant (i),
c) des agents d'allongement des chaînes,
d) le cas échéant des agents porogènes,
e) des activateurs et le cas échéant
f) d'autres produits auxiliaires et additifs,
les composants de départ étant mis à réagir en respectant un indice d'isocyanate de 70 à 130, et les résines synthétiques moulées, alvéolaires ou massives, à base de polyéther-polyuréthannes, ayant une densité apparente ≥ 800 kg/m³.

2. Utilisation selon la revendication 1, en semelles de marche pour chaussures de sécurité.

3. Utilisation selon la revendication 2, **caractérisée en ce que** la semelle de marche est associée à une semelle intermédiaire ayant une densité apparente ≥ 400 kg/m³.
